# EUROPÄISCHE PATENTSCHRIFT

(11) **EP 2 353 884 B1**
(45) Veröffentlichungstag und Bekanntmachung des Hinweises auf die Patenterteilung: **16.01.2013**
(21) Anmeldenummer: 10188320.5
(22) Anmeldetag: 21.10.2010
(51) Int. Cl.: B60C 11/03, B60C 11/12

(54) **Fahrzeugluftreifen**
Pneumatic tyres for a vehicle
Pneus de véhicule

(30) Priorität: 26.01.2010 DE 102010000210
(43) Veröffentlichungstag der Anmeldung: 10.08.2011
(73) Patentinhaber: Continental Reifen Deutschland GmbH, 30165 Hannover (DE)
(72) Erfinder: Seng, Matthias, 30449, Hannover (DE); Diensthuber, Franz, 30559, Hannover (DE); Ohliger, Philipp, 30826, Garbsen (DE)
(74) Vertreter: Finger, Karsten

(56) Entgegenhaltungen:
- EP-A1- 0 669 216
- EP-A1- 0 678 402
- EP-A2- 0 921 020
- EP-A2- 0 943 464
- DE-A1-102005 058 365

## Beschreibung

Die Erfindung betrifft einen Fahrzeugluftreifen, insbesondere für den Einsatz unter winterlichen Fahrbedingungen, mit einem Laufstreifen mit zumindest drei in Umfangsrichtung umlaufenden Umfangsbereichen bestimmter Breite aus Profilpositiven, welche mit einer Vielzahl von in jedem Umfangsbereich zumindest im Wesentlichen parallel zueinander verlaufenden Einschnitten versehen sind, welche das jeweilige Profilpositiv in eine Anzahl von Profilpositivelementen gliedern, wobei der Laufstreifen, auf das Fahrzeug bezogen, einen Außenbereich und einen Innenbereich aufweist, in welchen Bereichen schulterseitig strukturell unterschiedlich gestaltete Umfangsbereiche vorgesehen sind, wobei die Profilpositive im schulterseitigen Umfangsbereich im Innenbereich des Laufstreifens eine geringere Quersteifigkeit und eine größere Umfangssteifigkeit aufweisen als die Profilpositive im schulterseitigen Umfangsbereich im Außenbereich des Laufstreifens.

Ein derartiger Fahrzeugluftreifen ist aus der EP-A-0 943 464 bekannt. Der Laufstreifen weist einen Außenbereich und einen Innenbereich auf mit schulterseitig strukturell unterschiedlich gestalteten Umfangsbereichen. Im Außen- und im Innenbereich verlaufen in axialer Richtung Rillen, wobei die im Außenbereich verlaufenden axialen Rillen einen Winkel von 60° bis 80° und die im Innenbereich verlaufenden axialen Rillen einen Winkel von 80° bis 110° mit dem Reifenäquator einschließen. Die EP-A-0 678 402 betrifft einen Fahrzeugluftreifen mit einem asymmetrischen Laufstreifen, welcher mit Umfangsrillen und Querrillen in Profilblockreihen gegliedert ist. In der einen Laufstreifenhälfte ist die Gesamtheit der durchschnittlichen Rillenbreiten der Umfangsrillen größer als in der zweiten Laufstreifenhälfte. Die Gesamtheit der durchschnittlichen Rillentiefen der Querrillen in der ersten Laufstreifenhälfte ist geringer als die Gesamtheit der durchschnittlichen Rillenbreiten der Querrillen in der zweiten Laufstreifenhälfte. Auch der aus der EP-A-0 669 216 bekannte Fahrzeugluftreifen weist einen asymmetrischen Laufstreifen mit einem Außenbereich und einem Innenbereich auf. Außen- und Innenbereich weisen schulterseitig je eine Blockreihe auf, wobei in der Schulterblockreihe im Laufstreifeninnenabschnitt Feineinschnitte angeordnet sind, die in Draufsicht betrachtet treppen- oder sägezahnförmig gestaltet sind. In der Schulterblockreihe im Laufstreifenaußenbereich sind wellen- oder zick-zack-förmige Feineinschnitte angeordnet. Ein weiterer Fahrzeugluftreifen mit einem asymmetrisch gestalteten Laufstreifen mit einem Außenbereich und einem Innenbereich ist aus der EP-A-0 921 020 bekannt. Eine Umfangsrille teilt den Laufstreifen in zwei funktional unterschiedlich ausgebildete Bereiche, wobei die Profilblöcke in jenem Bereich, der sich von der Umfangsrille bis zum Außenbereich erstreckt, eine höhere Querschubsteifigkeit aufweisen als die Profilblockelemente, die sich von dieser Umfangsrille zum Innenbereich des Laufstreifens erstrecken. Die DE-A-10 2005 058365 befasst sich mit einem Laufstreifen für einen Winterreifen mit Profilblöcken, in denen sinusförmig gewellte Feineinschnitte ausgebildet sind, welche einen längs ihrer Haupterstreckungsrichtung progressiv zunehmenden Amplitudenverlauf der sinusförmigen Wellenform aufweisen.

Ein weiterer Fahrzeugluftreifen dessen Laufstreifen asymmetrisch gestaltet ist und auf das Fahrzeug bezogen, einen Laufstreifeninnenbereich und einen Laufstreifenaußenbereich aufweist, ist aus der EP-B-0 671 288 bekannt. Die Profilpositive im Laufstreifenaußen - und im Laufstreifeninnenbereich sind jeweils in sich über den Umfang wiederholenden gleichartigen Pitches angeordnet, wobei bei diesem bekannten Laufstreifen die Gesamtpitchanzahl im Laufstreifenaußenbereich kleiner ist als jene im Laufstreifeninnenbereich. Das Laufstreifenprofil ist ferner derart ausgelegt bzw. gestaltet, dass der Positivanteil in den beiden Laufstreifenhälften zumindest im Wesentlichen gleich groß ist. Der gleich große Positivanteil in den beiden Laufstreifenhälften soll dem Laufstreifen eine über seine Breite ausgewogene Profilsteifigkeit verleihen, um derart das Fahrverhalten des Reifens zu verbessern.

Ein weiterer Fahrzeugluftreifen (PKW-Winterreifen) mit einem asymmetrisch gestalteten Laufstreifenprofil, welcher, auf das Fahrzeug bezogen, einen Laufstreifeninnen- und einen Laufstreifenaußenbereich aufweist, ist aus der EP-B-O 669 216 bekannt. Die Profilpositive im Laufstreifeninnenbereich sind mit Einschnitten versehen, welche, in Draufsicht betrachtet, einen treppen- oder sägezahnförmigen Verlauf aufweisen, die Profilpositive im Laufstreifenaußenbereich sind mit Einschnitten versehen, welche einen wellen- oder zick-zack-förmigen Verlauf aufweisen. Durch diese Maßnahmen soll eine Optimierung der Übertragung der Antriebskräfte des Fahrzeuges auf den Reifen auf vereistem oder verschneitem Untergrund erzielt werden.

Es ist allgemein üblich, in Laufstreifen von PKW-Winterreifen die Umfangs- und die Quersteifigkeit der Profilpositive einzustellen, insbesondere durch die Wahl der Gesamtanzahl der Einschnitte pro Profilpositiv und/oder die Anordnung der Einschnitte in den Profilpositiven. Dabei steht es im Vordergrund, den Laufstreifen insgesamt möglichst gleichmäßig steif auszulegen, um einen gleichmäßigen Abrieb sicherzustellen. Es ist jedoch bekannt, dass für die Fahreigenschaften auf trockener Fahrbahn, insbesondere bei Kurvenfahrt unter hoher Belastung und/oder mit hoher Geschwindigkeit, eine höhere Quersteifigkeit der Profilpositive im Außenbereich des Laufstreifens vorteilhaft ist. Für ein gutes Reaktionsvermögen bei geringen Lenkwinkeln wäre eine hohe Umfangssteifigkeit der Profilpositive im Innenbereich wichtig. Die sich teilweise widersprechenden Anforderungen an den Laufstreifen stellen eine Herausforderung bei der Weiterentwicklung von Laufstreifen dar.

Die Profilpositive, insbesondere Blöcke, werden durch die Einschnitte in einzelne Profilpositivelemente gegliedert, welche üblicherweise in einem einzelnen Profilpositiv stark unterschiedliche Umfangssteifigkeiten, mit Steifigkeitsabweichungen von bis zu 70%, aufweisen. Dies führt zu einer stark variierenden Bodendruckverteilung der einzelnen Profilpositive. Sowohl die einen sehr hohen als auch die einen sehr niedrigen Bodendruck erzeugenden Profilpositivelemente leisten kaum einen Beitrag zum Griff des Profilpositivs auf eisigem Untergrund, da die Teilbereiche mit geringem Bodendruck mangels Anpressdruck sehr leicht über eisigen Untergrund gezogen werden und die Teilbereiche mit großem Bodendruck durch ihre hohe Reibungsenergie ein Aufschmelzen der Eisoberfläche bewirken können.

Der Erfindung liegt die Aufgabe zugrunde, mit Reifen der eingangs genannten Art auch Kurvenfahrten im Grenzbereich zu ermöglichen und ein hohes Reaktionsvermögen auf Lenkbewegungen sicher zu stellen. Ein gleichmäßiger Laufstreifenabrieb soll erhalten blieben. Insbesondere sollen auch die Griffeigenschaften des Laufstreifens auf eisigem Untergrund verbessert werden.

Gelöst wird die gestellte Aufgabe erfindungsgemäß dadurch, dass die Profilpositive im schulterseitigen Umfangsbereich im Innenbereich des Laufstreifens eine um mindestens 10% geringere Quersteifigkeit und eine um mindestens 15% größere Umfangssteifigkeit aufweisen als die Profilpositive im schulterseitigen Umfangsbereich im Außenbereich des Laufstreifens, und dass der Positivanteil im schulterseitigen Umfangsbereich im Innenbereich um mindestens 10% größer ist als der Positivanteil im schulterseitigen Umfangsbereich im Außenbereich.

Die höhere Quersteifigkeit an der Profilaußenseite - im Vergleich zur Profilinnenseite - ist für das Fahrverhalten des Reifens im Grenzbereich, insbesondere beim Kurvenfahren unter hoher Geschwindigkeit und/oder hoher Belastung, von besonderem Vorteil. Die höhere Umfangssteifigkeit der Profilpositive an der Reifeninnenseite ist hingegen für das Fahrverhalten bei geringen Lenkeinschlägen wichtig. Die im Laufstreifeninnenbereich höhere Umfangssteifigkeit würde im Vergleich zur geringen Umfangssteifigkeit an der Außenschulter einen höheren Abrieb bewirken, was jedoch gemäß der Erfindung durch den im Vergleich zum Außenbereich höheren Positivanteil im Innenbereich ausgeglichen wird.

Bei einer bevorzugten Ausführungsform der Erfindung weisen die Profilpositivelemente eines Profilpositivs im Wesentlichen übereinstimmende Umfangssteifigkeiten auf, wobei das umfangssteifste Profilpositivelement eine Umfangssteifigkeit aufweist, die um höchstens 20% größer ist als die Umfangssteifigkeit des Profilpositivelementes mit der geringsten Umfangssteifigkeit, und wobei die zu einem Umfangsbereich gehörenden Profilpositive bezüglich der Umfangssteifigkeit ihrer Profilpositivelemente übereinstimmend oder weitgehend übereinstimmend ausgeführt sind. Die einzelnen Profilpositivelemente eines Profilpositivs erzeugen daher etwa gleich großen Bodendruck, wodurch die Griff-Performance des Laufstreifens deutlich verbessert wird.

Für einen gleichmäßigen Laufstreifenabrieb ist es von Vorteil, wenn die Quersteifigkeit der Profilpositive in den zwischen den beiden schulterseitigen Umfangsbereichen verlaufenden Umfangsbereichen höchstens der Quersteifigkeit der Profilpositive im äußeren Umfangsbereich entspricht. Für die Fahreigenschaften auf trockener Fahrbahn ist es darüber hinaus vor allem von Vorteil, wenn die Quersteifigkeit der Profilpositive in den Umfangsbereichen von Umfangsbereich zu Umfangsbereich schrittweise abnimmt.

Ein besonders exaktes Ansprechen auf Lenkeinschläge wird gemäß der Erfindung dadurch erzielt, dass die Umfangssteifigkeit der Profilpositive in den zwischen den beiden schulterseitigen Umfangsbereichen verlaufenden Umfangsbereichen geringer ist als die Umfangssteifigkeit der Profipositive in dem schulterseitig im Außenbereich des Laufstreifens verlaufenden Umfangsbereich.

Wird das Laufstreifenprofil derart ausgeführt, dass die beiden schulterseitig im Außen- und im Innenbereich verlaufenden Umfangsbereiche jeweils aus einer Blockreihe bestehen oder jeweils eine Blockreihe umfassen und beträgt darüber hinaus die Breite dieser Umfangsbereiche zwischen 20% und 30% der Bodenaufstandsflächenbreite lassen sich die erwünschte Umfangssteifigkeit und die erwünschte Quersteifigkeit in diesen Umfangsbereichen besonders gut einstellen. Geeignete Maßnahmen sind beispielsweise die Wahl der Größe der Quererstreckung und der Umfangserstreckung der Profilblöcke, die Ausführung der Gestalt/ Form der Profilblöcke, die Ausrichtung der Erstreckung der Einschnitte innerhalb der Profilblöcke, die Wahl der Tiefe und des Tiefenverlaufs der Einschnitte und dergleichen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf eine Teilabwicklung eines Laufstreifens eines Fahrzeugluftreifens,
Fig. 2 ein Diagramm, welches die Quersteifigkeitsverteilung eines Laufstreifens gemäß der Erfindung über die Reifenbreite darstellt,
Fig. 3, ein Diagramm, welches die Umfangssteifigkeitsverteilung eines Laufstreifens gemäß der Erfindung über die Reifenbreite darstellt und
Fig. 4 ein Diagramm, welches eine mögliche Verteilung der Positivfläche eines Laufstreifens gemäß der Erfindung über die Reifenbreite wiedergibt.

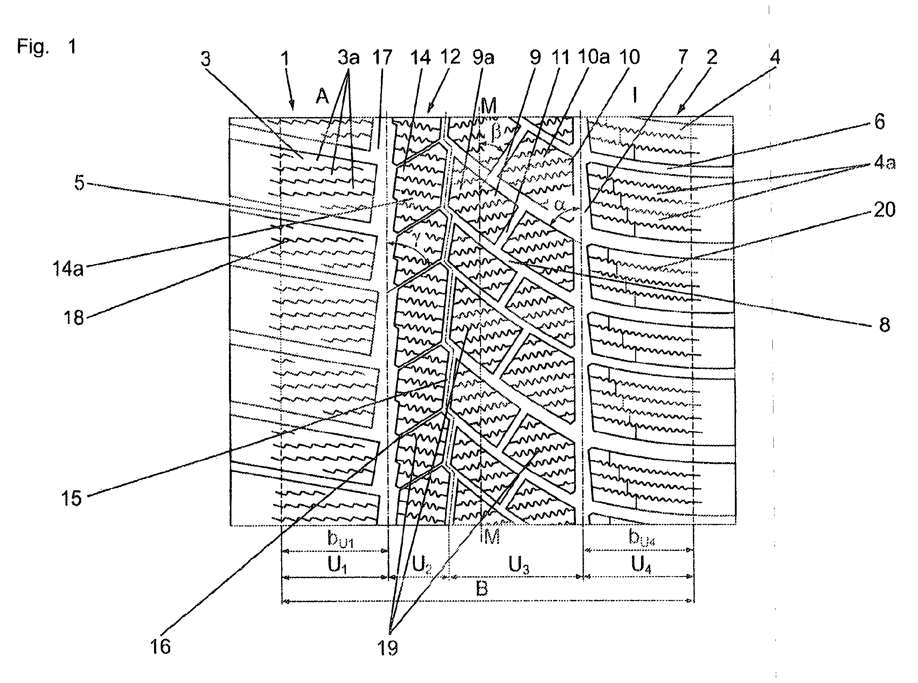

Der in Fig. 1 gezeigte Laufstreifen ist für Winterreifen von Personenkraftwagen vorgesehen und ist ein sogenannter asymmetrischer Laufstreifen, welcher einen definierten Außenbereich A und einen definierten Innenbereich I aufweist, wobei sich die Profilstrukturen im Außenbereich A von jenen im Innenbereich I, wie noch beschrieben wird, unterscheiden. Der Außenbereich A ist jener, welcher bei am Fahrzeug montiertem Reifen an der Fahrzeugaußenseite liegt, der Innenbereich I ist daher jener, welcher bei am Fahrzeug montiertem Reifen der Fahrzeuglängsachse zugewandt ist. B bezeichnet die Breite des bodenberührenden Teils des Laufstreifens, die Bodenaufstandsflächenbreite, ermittelt gemäß den E.T.R.T.O. Standards, mit M-M ist der Reifenäquator bezeichnet.

Sowohl im Außen- als auch im Innenbereich A, I weist der Laufstreifen schulterseitig jeweils eine Blockreihe 1, 2 auf. Die Schulterblockreihe 1 verläuft innerhalb eines Umfangsbereiches U₁, die Schulterblockreihe 2 innerhalb eines Umfangbereiches U₄. Die Umfangsbereiche U₁ und U₄ weisen jeweils eine Breite bᵤ₁, bᵤ₄ von 20% bis 30% der Bodenaufstandsflächenbreite B auf. Die Profilstrukturen im mittleren Bereich des Laufstreifens gehören bei der dargestellten Ausführungsform zu zwei weiteren Umfangsbereichen U₂ und U₃, wie weiter unten beschrieben wird. Die zum Innenbereich I gehörende Schulterblockreihe 2 setzt sich aus Profilblöcken 4 zusammen, welche durch Quernuten 6 voneinander getrennt sind, welche im Wesentlichen in Laufstreifenquerrichtung und bei der gezeigten Ausführungsform leicht bogenförmig gekrümmt verlaufen. Eine breite, in Umfangsrichtung umlaufende Umfangsnut 7 trennt die Profilblöcke 4 von den im mittleren Bereich des Laufstreifens angeordneten Profilpositiven. Im mittleren Bereich des Laufstreifens verlaufen leicht bogenförmig und in Fortsetzung der Quernuten 6 zur Laufstreifenmitte Schrägrillen 8, welche gegenüber dem Reifenäquator M-M unter einem Winkel α in der Größenordnung von 30° bis 45° geneigt sind. Zwischen den in Umfangsrichtung benachbarten Schrägrillen 8 sind jeweils paarweise Profilblöcke 9, 10 angeordnet, welche in Draufsicht im Wesentlichen trapezförmig gestaltet sind und voneinander durch je eine weitere Rille 11 getrennt sind, welche, bezogen auf den Reifenäquator M-M, gegensinnig zu den Schrägrillen 8 geneigt sind und mit dem Reifenäquator M-M einen Winkel β, welcher in der Größenordnung von 30° bis 40° beträgt, einschließen. Die Profilblöcke 9, 10 bilden gemeinsam mit den Schrägrillen 8 und den Rillen 11 den Umfangsbereich U₃. An die Profilblöcke 10 schließen zum Außenbereich A Profilblöcke 14 einer weiteren Blockreihe 12 an. Eine Umfangsrille 15, deren Breite etwa der Breite der Schrägrillen 8 bzw. der weiteren Rillen 11 entspricht, trennt die Profilblöcke 14 von den Profilblöcken 9. Die gegenseitige Anordnung der Profilblöcke 9 und 14 sowie deren äußere Form bzw. Gestalt bewirkt einen etwa zick-zackförmigen Verlauf der Umfangsrille 15 in Reifenumfangsrichtung. Die Profilblöcke 14 der Blockreihe 12 sind voneinander durch Querrillen 16 getrennt, welche wesentlich schmäler sind als die Schrägrillen 8 und insbesondere eine Breite von 1,5 mm bis 2,5 mm aufweisen. Die Querrillen 16 sind gegensinnig zu den Schrägrillen 8 geneigt, ihr Neigungswinkel γ relativ zum Reifenäquator M-M beträgt in der Größenordnung von 50° bis 60°. Die Blockreihe 12 verläuft im Umfangsbereich U₂, wobei die Trennlinie zwischen den Umfangsbereichen U₂ und U₃ entlang der Mittellinie der Rille 15 verläuft. Eine breite Umfangsnut 17 trennt die Blockreihe 12 von der Schulterblockreihe 1 im Außenbereich A, welche sich aus Profilblöcken 3 zusammensetzt, die voneinander durch Quernuten 5 getrennt sind. Bei der gezeigten Ausführungsvariante sind die Quernuten 5 als gerade verlaufenden Nuten ausgeführt, welche sich im Wesentlichen in Laufstreifenquerrichtung erstrecken bzw. unter einem Winkel bis zu etwa 10° relativ zur Laufstreifenquerrichtung verlaufen.

Die Profilstrukturen - insbesondere die Profilblöcke 3, 4, 9, 10, 14, die Rillen 8 und die Quernuten 5, 6 - sind nach einem Pitchlängenvariantionsverfahren geräuschoptimiert, sodass sie mit unterschiedlicher Umfangserstreckung ausgeführt sind. Das Pitchlängenvariationsverfahren ist nicht Gegenstand der Erfindung, sodass auf dieses nicht näher eingegangen wird.

Die Profilblöcke 3 der Schulterblockreihe 1 sind mit Einschnitten 18, die Profilblöcke 4 der Schulterblockreihe 2 mit Einschnitten 20 und die Profilblöcke 9, 10 und 14 im mittleren Bereich des Laufstreifens sind jeweils mit Einschnitten 19 versehen. Die Breite der Einschnitte 18, 19, 20 wird zwischen 0,4 mm und 0,6 mm gewählt. Die in den Profilblöcken 3 der Schulterblockreihe 1 im Außenbereich A angeordneten Einschnitte 18 verlaufen jeweils parallel zueinander, sie weisen in Draufsicht einen sägezahn- bzw. treppenförmigen Verlauf auf, ihre Erstreckungsrichtung entspricht der Laufstreifenquerrichtung, sodass eine in ihrer Erstreckungsrichtung gezogene Linie mit den Quernuten 5 einen kleinen spitzen Winkel, e nach Winkelung der Quernuten 5 in der Größenordnung von bis zu 10°, einschließt. Alternativ können sich die Einschnitte 18 parallel zu den Quernuten 5 erstrecken. Die jeweils einer Quernut 5 benachbart verlaufenden Einschnitte 18 sind in Folge ihrer von der Erstreckung der Quernuten 5 abweichenden Erstreckung kürzer ausgeführt als jene Einschnitte 18, die sich im mittleren Bereich der Profilblöcke 3 befinden. Die Anzahl der Einschnitte 18 pro Profilblock 3 beträgt je nach der Größe der Umfangserstreckung der Profilblöcke 3 vier oder fünf mit entsprechend kurzen Einschnitten 18 an den den Quernnuten 5 benachbarten Blockbereichen.

Die Einschnitte 20 in den Profilblöcken 4 sind zueinander und zu den Quernuten 6 parallel angeordnet und weisen über einen Großteil ihrer Erstreckung einen in Draufsicht wellenförmigen Verlauf auf. Sämtliche Einschnitte 20 münden mit geraden Endabschnitten in die Umfangsnut 7. Die Anzahl der Einschnitte 20 pro Profilblock 4 beträgt je nach der Größe der Umfangserstreckung des jeweiligen Profilblockes 4 zwischen zwei und vier.

Die in den Profilblöcken 9, 10 und 14 angeordneten Einschnitte 19 verlaufen in den Profilblöcken 9, 10 und 14 jeweils parallel zueinander, ihre Erstreckungsrichtung entspricht im Wesentlichen der Laufstreifenquerrichtung bzw. weicht von dieser lediglich um einen kleinen spitzen Winkel von bis zu 15° ab. Die Anzahl der Einschnitte 19 pro Profilblock 9, 10 und 14 beträgt zwischen fünf und sieben. Die Einschnitte 19 sind überwiegend als in Draufsicht wellen- bzw. zick-zack-förmig verlaufende Einschnitte ausgeführt. Sie münden jeweils mit kurzen geraden und in ihrer Erstreckungsrichtung verlaufenden Endabschnitten in die die jeweiligen Profilblöcke 9, 10 und 14 begrenzenden Rillen 8, 11, 15 bzw. Nuten 7, 17. Die Einschnitte 18, 19 und 20 weisen weiters einen gegenseitigen Abstand auf, der entweder zumindest im Wesentlichen innerhalb eines Profilblockes 3, 4, 9, 10 und 14 gleich groß ist oder für alle oder einzelne Einschnitte variiert wird.

Es ist bekannt, dass sich durch eine Variation der Tiefe der Einschnitte in Profilblöcken die Profilblocksteifigkeit, insbesondere die Umfangssteifigkeit der einzelnen, zwischen den benachbarten Einschnitten gebildeten Profilblockelemente, beeinflussen lässt. So ist es beispielsweise üblich, Einschnitte in jenen Abschnitten, die in Rillen bzw. Nuten münden, seichter auszuführen als im mittleren Bereich ihres Verlaufes. In den Profilblöcken 3 der Schulterblockreihe 1 sind die Profilblockelemente mit 3a, in den Profilblöcken 4 der Schulterblockreihe 2 mit 4a und in den Profilblöcken 9, 10 und 14 jeweils mit 9a, 10a und 14a bezeichnet. Die Tiefenvariation der Einschnitte 18, 19 und 20 ist derart ausgeführt bzw. optimiert, dass in jedem Profilblock 3, 4, 9, 10 und 14 deren Profilblockelemente 3a, 4a, 9a, 10a und 14a eine im Wesentlichen gleich große Umfangssteifigkeit aufweisen. Die Tiefenvariation der Einschnitte 18, 19, 20 kann in jedem Profilblock 3, 4, 9, 10 und 14 individuell sein, je nach Blockform, Einschnittposition, Einschnittverlauf etc. Diese zumindest teilweise individuelle Tiefenvariation erfolgt derart, dass das steifste Profilblockelement 3a, 4a, 9a, 10a und 14a innerhalb eines einzelnen Profilblocks 3, 4, 9, 10 und 14 eine um maximal 20%, insbesondere maximal 10%, größere Umfangssteifigkeit aufweist als das in diesem Profilblock befindliche Profilblockelement 3a, 4a, 9a, 10a und 14a mit der geringsten Umfangssteifigkeit. Die zu jedem Umfangsbereich U₁ bis U₄ gehörenden Profilblöcke 3 (U₁), 14 (U₂), 9, 10 (U₃) und 4 (U₄) sind jedoch - jeweils mit der erwähnten Variation von maximal 20% - bezüglich ihrer Umfangssteifigkeit übereinstimmend oder weitgehend übereinstimmend ausgelegt bzw. ausgeführt.

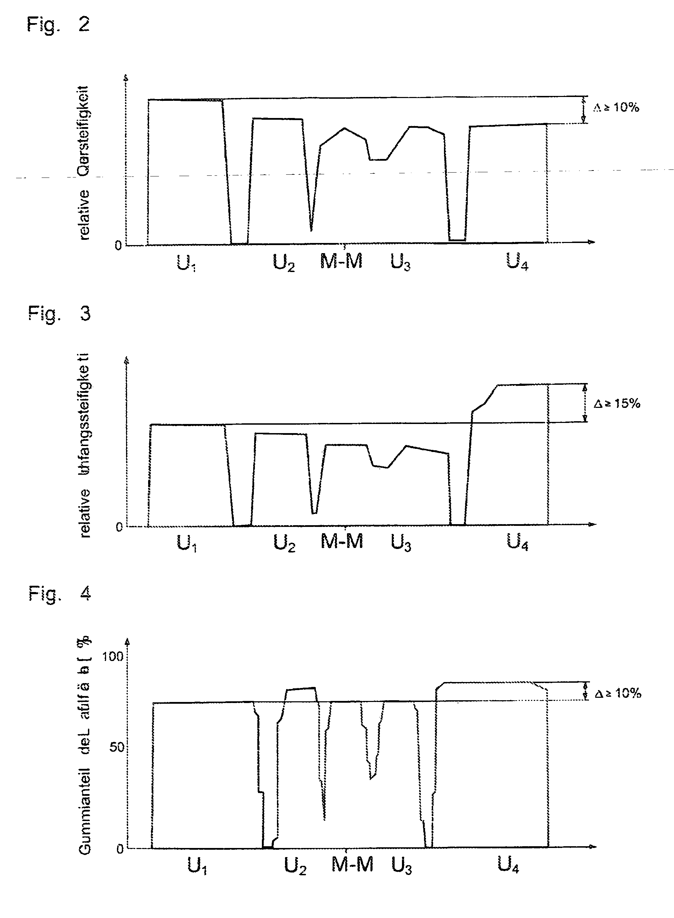

Wie Fig. 2 zeigt variiert die Quersteifigkeit der Profilpositive in den einzelnen Umfangsbereichen U₁ bis U₄ derart, dass die Quersteifigkeit der Profilpositive im Umfangbereich U₄, beim dargestellten Ausführungsbeispiel der in U₄ verlaufenden Schulterblöcke 6, um mindestens 10%, vorzugsweise maximal bis zu 25%, geringer ist als die Quersteifigkeit der Profilpositive (Schulterblöcke 3) im Umfangsbereich U₁ im Außenbereich A. In den zwischen den im Außenbereich A befindlichen Umfangsbereich U₁ und dem im Innenbereich I befindlichen Umfangsbereich U₄ verlaufenden Umfangsbereichen U₂ und U₃ weisen die Profilpositive eine Quersteifigkeit auf, die maximal der Quersteifigkeit der Profilpositive im Umfangsbereich U₁ entspricht, insbesondere nehmen die Quersteifigkeiten schrittweise ab, wobei die Profilpositive im Unfangsbereich U₂ quersteifer sind als jene im Umfangsbereich U₃. Die Quersteifigkeit der Profilpositive in den Umfangsbereichen U₂ und U₃ kann jedoch auch geringer sein als jene im Umfangsbereich U₄.

Auch die Umfangssteifigkeit der Profilpositive in den Umfangsbereichen U₁ bis U₄ variiert, wie es beispielsweise Fig. 3 zeigt. Die Profilpositive im Umfangsbereich U₄ im Innenbereich I weisen eine größere Umfangssteifigkeit auf als die Profilpositive im Umfangsbereich U₁ im Außenbereich A, insbesondere ist die Umfangssteifigkeit der Profilpositive im Umfangsbereich U₄ um mindestens 15%, vorzugsweise maximal bis zu 25%, größer als die Umfangssteifigkeit der Profilpositive im Umfangsbereich U₁. Die zwischen den beiden äußeren Umfangsbereiche U₁ und U₄ verlaufenden Umfangsbereiche U₂ und U₃ weisen Profilpositive auf, deren Umfangssteifigkeit vorzugsweise geringer ist als die Umfangssteifigkeit der Profilpositive im Umfangsbereich U₁ im Außenbereich A.

Die Größe der Quersteifigkeit und der Umfangssteifigkeit wird mit den üblichen und bekannten Maßnahmen eingestellt, beispielsweise durch die Wahl der Größe (Quererstreckung und Längserstreckung) und die Wahl der Gestalt/ Form der Profilblöcke, die Ausrichtung der Erstreckung der Einschnitte, die Wahl der Tiefe und des Tiefenverlaufes der Einschnitte, die Einstellung des gegenseitigen Abstandes der Einschnitte und dergleichen.

Der Umfangsbereich U₄ mit der höheren Umfangssteifigkeit weist einen Positivanteil auf, welcher um mindestens 10% größer ist, maximal um bis zu 15%, als der Positivanteil im Umfangsbereich U₁ im Außenbereich A, wie es in Fig. 4 dargestellt ist. Unter Positivanteil wird jener Anteil an der Gesamtaußenfläche des jeweiligen Umfangsbereiches U₁ und U₄ verstanden, welcher mit Laufstreifengummi bedeckt ist und daher beim Abrollen des Reifens mit dem Untergrund in Kontakt kommt. Der Positivanteil im Umfangsbereich U₁ im Außenbereich A beträgt insbesondere in der Größenordnung von 60% bis 80%. Die zwischen den Umfangsbereichen U₁ und U₂ verlaufenden Umfangsbereiche U₃ und U₄ weisen Positivanteile auf, deren Größe zwischen der Größe der Positivanteile der Umfangsbereiche U₁ und U₄ liegt, es ist jedoch auch möglich, dass die im mittleren Bereich des Laufstreifens verlaufenden Umfangsbereiche U₂, U₃ derart gestaltet werden, dass ihre Positivanteile größer oder kleiner sind als die Positivanteile in den äußeren Umfangsbereichen U₁ und U₄.

Der höhere Positivanteil im Umfangsbereich U₄ im Innenbereich I verringert den Laufstreifenabrieb und gleicht einen etwaigen höheren Abrieb durch die höhere Umfangssteifigkeit in diesem Umfangsbereich aus.

Die Erfindung ist auf das dargestellte Ausführungsbeispiel nicht eingeschränkt. Gemäß der Erfindung ausgeführte bzw. ausgelegte Laufstreifen für Fahrzeugluftreifen können auch Umfangsbereiche aus oder mit in Umfangsrichtung umlaufenden Laufstreifenbändern, die mit einer Vielzahl von Einschnitte versehen sind, aufweisen. Der Laufstreifen kann ferner derart ausgeführt sein, dass er durch eine Anzahl von in Umfangsrichtung umlaufenden Umfangsnuten gebildete Blockreihen, die einzelne Umfangsbereiche definieren, aufweist.

### Bezugszeichenliste

- 1: Blockreihe
- 2: Blockreihe
- 3: Profilblock
- 3a: Profilblockelement
- 4: Profilblock
- 4a: Profilblockelement
- 5: Quernut
- 6: Quernut
- 7: Umfangsnut
- 8: Schrägrille
- 9: Profilblock
- 9a: Profilblockelement
- 10: Profilblock
- l0a: Profilblockelement
- 11: Rille
- 12: Blockreihe
- 14: Profilblock
- 14a: Profilblockelement
- 15: Umfangsrille
- 16: Querrille
- 17: Umfangsnut
- 18: Einschnitt
- 19: Einschnitt
- 20: Einschnitt
- A: Außenbereich
- 1: Innenbereich
- B: Breite der Bodenaufstandsfläche
- M-M: Reifenäquator
- α: Winkel
- β: Winkel
- γ: Winkel
- U₁: Umfangsbereich
- U₂: Umfangsbereiche
- U₃: Umfangsbereich
- U₄: Umfangsbereich
- bᵤ₁: Breite
- bᵤ₄: Breite

## Patentansprüche

1. Fahrzeugluftreifen, insbesondere für den Einsatz unter winterlichen Fahrbedingungen, mit einem Laufstreifen mit zumindest drei in Umfangsrichtung umlaufenden Umfangsbereichen (U₁ bis U₄) bestimmter Breite aus Profilpositiven (3, 4, 9, 10, 14), welche mit einer Vielzahl von in jedem Umfangsbereich (U₁ bis U₄) zumindest im Wesentlichen parallel zueinander verlaufenden Einschnitten (18, 19, 20) versehen sind, welche das jeweilige Profilpositiv (3, 4, 9, 10, 14) in eine Anzahl von Profilpositivelementen (3a, 4a, 9a, 10a, 14a) gliedern, wobei der Laufstreifen, auf das Fahrzeug bezogen, einen Außenbereich (A) und einen Innenbereich (I) aufweist, in welchen Bereichen (A, I) schulterseitig strukturell unterschiedlich gestaltete Umfangsbereiche(U₁, U₄)vorgesehen sind, wobei die Profilpositive im schulterseitigen Umfangsbereich (U₄) im Innenbereich (I) des Laufstreifens eine geringere Quersteifigkeit und eine größere Umfangssteifigkeit aufweisen als die Profilpositive im schulterseitigen Umfangsbereich (U₁) im Außenbereich (A) des Laufstreifens,
**dadurch gekennzeichnet,**
**dass** die Profilpositive im schulterseitigen Umfangsbereich (U₄) im Innenbereich (I) des Laufstreifens eine um mindestens 10% geringere Quersteifigkeit und eine um mindestens 15% größere Umfangssteifigkeit aufweisen als die Profilpositive im schulterseitigen Umfangsbereich (U₁) im Außenbereich (A) des Laufstreifens, und dass der Positivanteil im schulterseitigen Umfangsbereich (U₄) im Innenbereich (I) um mindestens 10% größer ist als der Positivanteil im schulterseitigen Umfangsbereich (U₁) im Außenbereich (A).

2. Fahrzeugluftreifen nach Anspruch 1, **dadurch gekennzeichnet, dass** die Profilpositivelemente (3a, 4a, 9a, 10a, 14a) eines Profilpositivs (3, 4, 9, 10, 14) im Wesentlichen übereinstimmende Umfangssteifigkeiten aufweisen, wobei das umfangssteifste Profilpositivelement (3a, 4a, 9a, 10a, 14a) eine Umfangssteifigkeit aufweist, die um höchstens 20% größer ist als die Umfangssteifigkeit des Profilpositivelementes (3a, 4a, 9a, 10a, 14a) mit der geringsten Umfangssteifigkeit, und wobei die zu einem Umfangsbereich (U₁ bis U₄) gehörenden Profilpositive (3, 4, 9, 10, 14) bezüglich der Umfangssteifigkeit ihrer Profilpositivelemente (3a, 4a, 9a, 10a, 14a) übereinstimmend oder weitgehend übereinstimmend ausgeführt sind.

3. Fahrzeugluftreifen nach Anspruch 1 oder 2, **dadurch gekennzeichnet, dass** die Quersteifigkeit der Profilpositive (9, 10, 14) in den zwischen den beiden schulterseitigen Umfangsbereichen (U₁, U₄) verlaufenden Umfangsbereichen (U₂, U₃) höchstens der Quersteifigkeit der Profilpositive (3) in dem schulterseitig im Außenbereich verlaufenden Umfangsbereich (U₁) entspricht.

4. Fahrzeugluftreifen nach Anspruch 3, **dadurch gekennzeichnet, dass** die Quersteifigkeit der Profilpositive (3, 4, 9, 10, 14) in den Umfangsbereichen (U₁ bis U₄) von Umfangsbereich zu Umfangsbereich schrittweise abnimmt.

5. Fahrzeugluftreifen nach Anspruch 1 oder 2, **dadurch gekennzeichnet, dass** die Umfangssteifigkeit der Profilpositive (9, 10, 14) in den zwischen den beiden schulterseitigen Umfangsbereichen (U₁, U₄) verlaufenden Umfangsbereichen (U₂, U₃) geringer ist als die Umfangssteifigkeit der Profilpositive (3) in dem schulterseitig im Außenbereich (A) des Laufstreifens verlaufenden Umfangsbereich (U₁).

6. Fahrzeugluftreifen nach Anspruch 1, **dadurch gekennzeichnet, dass** der Positivanteil in dem schulterseitig im Außenbereich (A) verlaufenden Umfangsbereich (U1) zwischen 60% und 80% beträgt.

7. Fahrzeugluftreifen nach einem der Ansprüche 1 bis 6, **dadurch gekennzeichnet, dass** die beiden schulterseitig im Außen- und im Innenbereich (A, I) verlaufenden Umfangsbereiche (U₁, U₄) jeweils eine Blockreihe (1, 2) umfassen.

8. Fahrzeugluftreifen nach einem der Ansprüche 1 bis 7, **dadurch gekennzeichnet, dass** die beiden schulterseitig im Außen- und im Innenbereich (A, I) verlaufenden Umfangsbereiche (U₁, U₄) eine Breite (bᵤ₁, bᵤ₄) von 20% bis 30% der Bodenaufstandsflächenbreite (B) aufweisen.

## Claims

1. Pneumatic vehicle tyre, in particular for use under winter driving conditions, with a tread strip with at least three circumferential regions (U₁ to U₄) of a specific width running around in the circumferential direction and comprising profile positives (3, 4, 9, 10, 14), which are provided with a multiplicity of sipes (18, 19, 20), which run at least substantially parallel to one another in each circumferential region (U₁ to U₄) and divide the respective profile positives (3, 4, 9, 10, 14) into a number of profile positive elements (3a, 4a, 9a, 10a, 14a), the tread strip having, with respect to the vehicle, an outer region (A) and an inner region (I), in which regions (A, I) there are structurally differently shaped circumferential regions (U₁, U₄) provided on the shoulder sides, the profile positives in the shoulder-side circumferential region (U₄) in the inner region (I) of the tread strip having a lower transverse stiffness and a greater circumferential stiffness than the profile positives in the shoulder-side circumferential region (U₁) in the outer region (A) of the tread strip,
**characterized**
**in that** the profile positives in the shoulder-side circumferential region (U₄) in the inner region (I) of the tread strip have a transverse stiffness that is less by at least 10% and a circumferential stiffness that is greater by at least 15% than the profile positives in the shoulder-side circumferential region (U₁) in the outer region (A) of the tread strip, and in that the positive component in the shoulder-side circumferential region (U₄) in the inner region (I) is greater by at least 10% than the positive component in the shoulder-side circumferential region (U₁) in the outer region (A).

2. Pneumatic vehicle tyre according to Claim 1, **characterized in that** the profile positive elements (3a, 4a, 9a, 10a, 14a) of a profile positive (3, 4, 9, 10, 14) have substantially the same circumferential stiffnesses, the circumferentially stiffest profile positive element (3a, 4a, 9a, 10a, 14a) having a circumferential stiffness that is greater by at most 20% than the circumferential stiffness of the profile positive element (3a, 4a, 9a, 10a, 14a) with the lowest circumferential stiffness, and the profile positives (3, 4, 9, 10, 14) belonging to a circumferential region (U₁ to U₄) being configured the same or largely the same with respect to the circumferential stiffness of their profile positive elements (3a, 4a, 9a, 10a, 14a).

3. Pneumatic vehicle tyre according to Claim 1 or 2, **characterized in that** the transverse stiffness of the profile positives (9, 10, 14) in the circumferential regions (U₂, U₃) running between the two shoulder-side circumferential regions (U₁, U₄) corresponds at most to the transverse stiffness of the profile positives (3) in the circumferential region (U₁) running on the shoulder side in the outer region.

4. Pneumatic vehicle tyre according to Claim 3, **characterized in that** the transverse stiffness of the profile positives (3, 4, 9, 10, 14) in the circumferential regions (U₁ to U₄) decreases in stages from circumferential region to circumferential region.

5. Pneumatic vehicle tyre according to Claim 1 or 2, **characterized in that** the circumferential stiffness of the profile positives (9, 10, 14) in the circumferential regions (U₂, U₃) running between the two shoulder-side circumferential regions (U₁, U₄) is less than the circumferential stiffness of the profile positives (3) in the circumferential region (U₁) running on the shoulder side in the outer region (A) of the tread strip.

6. Pneumatic vehicle tyre according to Claim 1, **characterized in that** the positive component in the circumferential region (U₁) running on the shoulder side in the outer region (A) is between 60% and 80%.

7. Pneumatic vehicle tyre according to one of Claims 1 to 6, **characterized in that** the two circumferential regions (U₁, U₄) running on the shoulder sides in the outer and inner regions (A, I) respectively comprise a series of blocks (1, 2).

8. Pneumatic vehicle tyre according to one of Claims 1 to 7, **characterized in that** the two circumferential regions (U₁, U₄) running on the shoulder sides in the outer and inner regions (A, I) have a width (bᵤ₁, bᵤ₄) of 20% to 30% of the ground contact width (B).

## Revendications

1. Pneu de véhicule, en particulier pour l'utilisation dans des conditions de conduite hivernales, comprenant une bande de roulement avec au moins trois régions périphériques (U₁ à U₄) de largeur déterminée disposées circonférentiellement dans la direction périphérique, constituées de parties à profil positif (3, 4, 9, 10, 14), qui sont pourvues d'une pluralité d'entailles (18, 19, 20) s'étendant au moins essentiellement parallèlement les unes aux autres dans chaque région périphérique (U₁ à U₄), qui divisent la partie à profil positif respective (3, 4, 9, 10, 14) en une pluralité d'éléments à profil positif (3a, 4a, 9a, 10a, 14a), la bande de roulement, par rapport au véhicule, présentant une région extérieure (A) et une région intérieure (I), dans lesquelles régions (A, I) sont prévues des régions périphériques (U₁, U₄) de configuration structurelle différente du côté de l'épaulement, les parties à profil positif dans la région périphérique (U₄) du côté de l'épaulement dans la région intérieure (I) de la bande de roulement présentant une plus faible rigidité transversale et une plus grande rigidité périphérique que les parties à profil positif dans la région périphérique (U₁) du côté de l'épaulement dans la région extérieure (A) de la bande de roulement, **caractérisé en ce que** les parties à profil positif dans la région périphérique (U₄) du côté de l'épaulement dans la région intérieure (I) de la bande de roulement présentent une rigidité transversale d'au moins 10 % inférieure et une rigidité périphérique d'au moins 15 % supérieure aux parties à profil positif dans la région périphérique (U₁) du côté de l'épaulement dans la région extérieure (A) de la bande de roulement, et **en ce que** la proportion de parties à profil positif dans la région périphérique (U₄) du côté de l'épaulement dans la région intérieure (I) est d'au moins 10 % supérieure à la proportion de parties à profil positif dans la région périphérique (U₁) du côté de l'épaulement dans la région extérieure (A).

2. Pneu de véhicule selon la revendication 1, **caractérisé en ce que** les éléments à profil positif (3a, 4a, 9a, 10a, 14a) d'une partie à profil positif (3, 4, 9, 10, 14) présentent des rigidités périphériques essentiellement coïncidentes, l'élément à profil positif (3a, 4a, 9a, 10a, 14a) ayant la rigidité périphérique maximale présentant une rigidité périphérique qui est supérieure d'au moins 20 % à la rigidité périphérique de l'élément à profil positif (3a, 4a, 9a, 10a, 14a) ayant la rigidité périphérique minimale, et les parties à profil positif (3, 4, 9, 10, 14) appartenant à l'une des régions périphériques (U₁ à U₄) étant réalisées de manière coïncidente ou sensiblement coïncidente en ce qui concerne la rigidité périphérique de leurs éléments à profil positif (3a, 4a, 9a, 10a, 14a).

3. Pneu de véhicule selon la revendication 1 ou 2, **caractérisé en ce que** la rigidité transversale des parties à profil positif (9, 10, 14) dans les régions périphériques (U₂, U₃) s'étendant entre les deux régions périphériques (U₁, U₄) du côté de l'épaulement correspond au plus à la rigidité transversale de la partie à profil positif (3) dans la région périphérique (U₁) s'étendant du côté de l'épaulement dans la région extérieure.

4. Pneu de véhicule selon la revendication 3, **caractérisé en ce que** la rigidité transversale des parties à profil positif (3, 4, 9, 10, 14) dans les régions périphériques (U₁ à U₄) diminue pas à pas d'une région périphérique à l'autre.

5. Pneu de véhicule selon la revendication 1 ou 2, **caractérisé en ce que** la rigidité périphérique des parties à profil positif (9, 10, 14) dans les régions périphériques (U₂, U₃) s'étendant entre les deux régions périphériques (U₁, U₄) du côté de l'épaulement est plus faible que la rigidité périphérique de la partie à profil positif (3) dans la région périphérique (U₁) s'étendant du côté de l'épaulement dans la région extérieure (A) de la bande de roulement.

6. Pneu de véhicule selon la revendication 1, **caractérisé en ce que** la proportion de parties à profil positif dans la région périphérique (U₁) s'étendant du côté de l'épaulement dans la région extérieure (A) est comprise entre 60 % et 80 %.

7. Pneu de véhicule selon l'une quelconque des revendications 1 à 6, **caractérisé en ce que** les deux régions périphériques (U₁, U₄) s'étendant du côté de l'épaulement dans la région extérieure et la région intérieure (A, I) comprennent à chaque fois une rangée de blocs (1, 2).

8. Pneu de véhicule selon l'une quelconque des revendications 1 à 7, **caractérisé en ce que** les deux régions périphériques (U₁, U₄) s'étendant du côté de l'épaulement dans la région extérieure et la région intérieure (A, I) présentent une largeur (bᵤ₁, bᵤ₄) de 20 % à 30 % de la largeur de la surface d'appui au sol (B).
